(19) **Europäisches Patentamt / European Patent Office / Office européen des brevets**

(11) **EP 2 050 644 B1**

(12) **FASCICULE DE BREVET EUROPEEN**

(45) Date de publication et mention
de la délivrance du brevet:
**20.06.2012   Bulletin 2012/25**

(51) Int Cl.:
**B60W 40/12** *(2012.01)*    **B60W 30/14** *(2006.01)*
**B60W 40/10** *(2012.01)*    **G01N 21/53** *(2006.01)*

(21) Numéro de dépôt: **08305578.0**

(22) Date de dépôt: **22.09.2008**

(54) **Procédés de mesure de la distance de visibilité d'un conducteur de véhicule automobile et de calcul d'une consigne de vitesse du véhicule, et systèmes pour leur mise en oeuvre**

Verfahren zur Messung der Sichtweite eines Fahrers eines Kraftfahrzeugs und zur Berechnung einer Geschwindigkeitseinstellung des Fahrzeugs sowie Systeme für deren Umsetzung

Methods for measuring the visibility of an automobile driver and calculating speed instructions for the vehicle, and method for implementing same

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **18.10.2007   FR 0758416**

(43) Date de publication de la demande:
**22.04.2009   Bulletin 2009/17**

(73) Titulaire: **Renault S.A.S.**
**92100 Boulogne-Billancourt (FR)**

(72) Inventeur: **Mousain, Johann**
**28500 Germainville (FR)**

(56) Documents cités:
**EP-A- 0 691 534          WO-A-2007/012300**
**BE-A3- 1 005 717         US-A- 5 195 144**
**US-A1- 2007 230 800      US-B1- 6 362 773**

**Description**

La présente invention concerne un procédé de mesure de la distance de visibilité d'un conducteur de véhicule automobile, un procédé de calcul d'une consigne de vitesse pour le véhicule, ainsi que des systèmes pour la mise en oeuvre de ces procédés.

On sait que la distance de visibilité est une donnée difficilement quantifiable par un conducteur de véhicule automobile. Il s'en suit qu'une partie des accidents se produisant lors de mauvaises conditions de visibilité (brouillard, pluie, fumée, etc...) sont provoqués par une vitesse du véhicule mal adaptée à de telles conditions en raison d'une erreur de jugement du conducteur concernant la distance de visibilité.

Pour pallier à de tels inconvénients, des procédés de mesure automatique de la distance de visibilité ont été conçus. Par exemple, dans le document FR-A-2 847 367, la distance de visibilité est calculée à partir de l'évolution verticale de la luminance d'une image acquise par une caméra embarquée dans le véhicule. Toutefois, ce procédé ne fonctionne qu'à la condition que l'horizon soit visible dans le champ de la caméra, c'est-à-dire qu'il soit possible de détecter et d'identifier une transition entre le sol et le ciel.

Dans le document FR-A-2 884 637, il est proposé de détecter la présence d'un brouillard par l'analyse d'une image par une caméra embarquée du halo produit par les phares du véhicule. Ce procédé ne fonctionne donc qu'à la nuit tombée.

Il a été également proposé dans le document DE-A-1004461 de détecter la présence d'un brouillard en suivant un objet dans un flux d'images produit par une caméra embarquée et en déterminant le contraste de cet objet entre deux images. Ce document ne décrit cependant pas de calcul de la distance de visibilité. Selon ce document, seule une information quant à la présence ou non de brouillard est délivrée au conducteur.

Enfin, il existe des procédés de mesure de la distance de visibilité nécessitant plusieurs caméras ou l'association d'une caméra et d'un télémètre, comme par exemple le procédé du document FR-A-2 876 826. De tels procédés nécessitent donc la multiplication de matériel coûteux et l'utilisation d'une unité de traitement d'informations présentant de grandes ressources de calcul en raison du traitement de deux flux de données distincts.

Le document US-A-2007/230800 divulgué par ailleurs un procédé de mesure de la distance de visibilité selon le préambule de la revendication 1.

Le but de la présente invention est de résoudre les problèmes susmentionnés, en proposant un procédé de mesure de la distance de visibilité d'un conducteur de véhicule automobile, capable de fonctionner quelque soit le moment de la journée ou le type d'environnement dans lequel se situe le véhicule, tout en n'utilisant qu'une unique caméra embarquée dans celui-ci.

A cet effet, l'invention a pour objet un procédé de mesure de la distance de visibilité d'un conducteur de véhicule automobile, qui, selon l'invention, comporte :

■ la détection et le suivi d'un objet, image d'un repère immobile par rapport au véhicule, dans un flux d'images en provenance de moyens d'acquisition d'image embarqués dans le véhicule ; et
■ le calcul de la distance de visibilité en fonction d'une distance parcourue par le véhicule entre un premier instant où l'objet est détecté pour la première fois dans le flux d'images et un deuxième instant où l'objet apparaît pour la dernière fois dans celui-ci.
■ la distance de visibilité est calculée comme étant la somme de ladite distance parcourue et d'une distance longitudinale entre l'objet et les moyens d'acquisition d'image au deuxième instant ;

Selon des modes de réalisation particuliers de l'invention, le procédé comporte une ou plusieurs des caractéristiques suivantes :

■ ladite distance longitudinale est calculée selon la relation

$$d_{pp} = \frac{V_T \times (t_n - t_T) \times u_T}{u_n - u_T}$$

où $d_{pp}$ est ladite distance longitudinale, $t_n$ est le deuxième instant, $t_T$ est un troisième instant précédent le deuxième instant, $V_T$ est la vitesse du véhicule au troisième instant, et $u_T$ et $u_n$ sont des coordonnées de l'objet au troisième et deuxième instants respectivement dans le plan image de la caméra selon un axe de celui-ci correspondant à un axe transversal du véhicule.
■ le calcul d'une consigne de vitesse longitudinale pour le véhicule automobile en fonction de la distance de visibilité calculée.

En d'autres termes, ayant mesuré la distance de visibilité, une consigne de vitesse adaptée à cette distance est calculée. Il est ainsi possible d'avertir le conducteur que sa vitesse actuelle, par exemple supérieure à la consigne, est trop élevée pour les conditions de visibilité rencontrées. Il est également possible de délivrer cette consigne à un régulateur de vitesse équipant le véhicule pour adapter de manière automatique la vitesse du véhicule aux conditions de visibilité.

Selon un mode de réalisation particulier de l'invention, la consigne de vitesse est calculée selon la relation :

$$V_{consigne} = \frac{d_{visibilité}}{t_{réaction}}$$

où $d_{visibilité}$ est la distance de visibilité calculée, et $t_{réaction}$ est un temps de réaction sécuritaire prédéterminé du conducteur.

L'invention sera mieux comprise à la lecture de la description qui va suivre, donnée uniquement à titre d'exemple, et faite en relation avec les dessins annexés, dans lesquels :

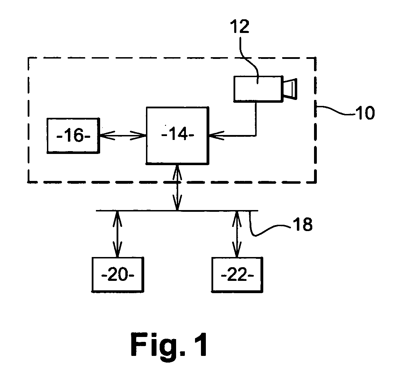

■ la figure 1 est une vue schématique d'un système selon l'invention de mesure de la distance de visibilité du conducteur et de calcul d'une consigne de vitesse pour le véhicule ;

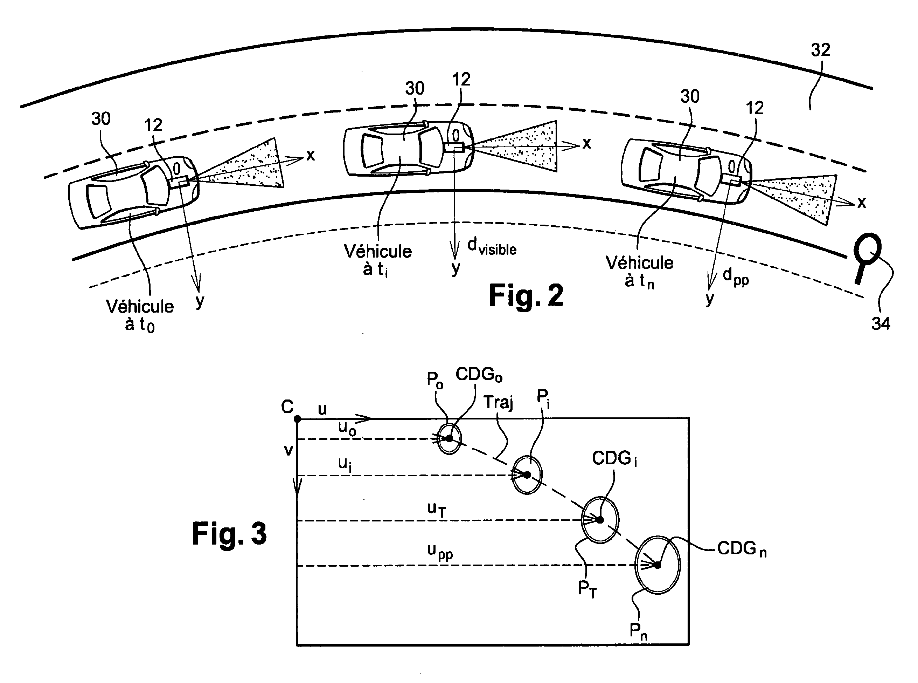

■ la figure 2 est une vue schématique du véhicule roulant sur une chaussée en direction d'un panneau de signalisation ;

■ la figure 3 est une tracé illustrant le déplacement apparent du panneau de signalisation dans le flux d'image en provenance de la caméra du système de la figure 1 ; et

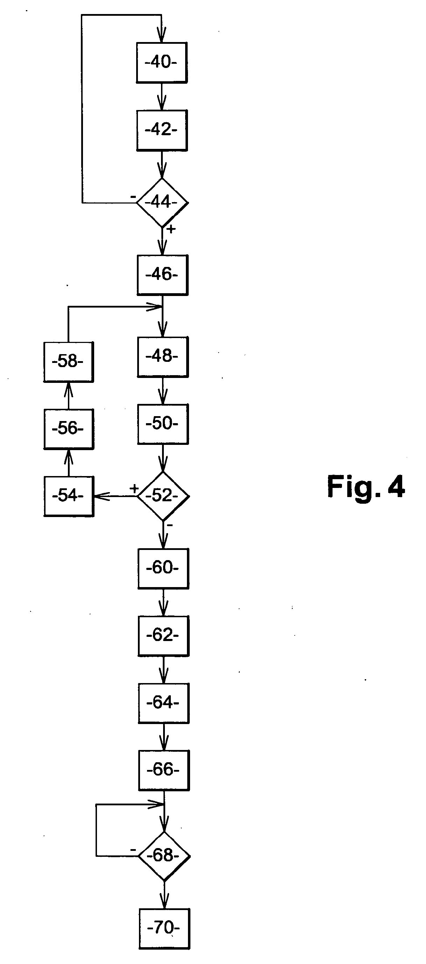

■ la figure 4 est un organigramme d'un procédé mis en oeuvre par le système de la figure 1.

Sur la figure 1, un système de mesure de la distance de visibilité d'un conducteur de véhicule automobile et de calcul d'une consigne de vitesse pour le véhicule est illustré sous la référence générale 10.

Le système 10 comporte une caméra 12 embarquée dans le véhicule et placée de préférence à l'avant de celui-ci de manière à couvrir au moins une partie du champ de vision du conducteur. Plus particulièrement, la caméra est agencée de manière à ce que des panneaux de signalisation à l'attention du conducteur soient également visibles par la caméra.

Le système 10 comporte également une unité de traitement d'informations 14, par exemple formée d'un calculateur de traitement d'image, connectée à la caméra 12 pour recevoir de celle-ci un flux d'images et le traiter. Le système 10 comprend en outre une mémoire de stockage 16, connectée à l'unité 14, pour la mémorisation de données intermédiaires de calcul, comme cela sera expliqué plus en détail par la suite.

Le système 10 est par ailleurs connecté à un réseau 18 de bord du véhicule, comme un réseau CAN par exemple, auquel sont par ailleurs connectés des moyens 20 d'interface homme/machine pour la communication au conducteur du véhicule de la mesure de la distance de visibilité et de la consigne de vitesse calculée, et un régulateur de vitesse 22.

Le procédé mis en oeuvre par le système de la figure 1 est à présent décrit en relation avec les figures 2 à 5.

Sur la figure 2, un véhicule 30, équipé du système venant d'être décrit, roule sur une chaussée 32 au bord de laquelle est installé un panneau de signalisation 34. Le véhicule 30 est ici représenté à différents instants et se dirige vers le panneau 34. Un repère orthogonal (O,x,y) est par ailleurs associé au véhicule 30 et a pour centre, le centre optique de la caméra 12, pour axe des abscisses, un axe longitudinal du véhicule 30, et pour axe des ordonnées un axe transversal du véhicule 30. L'axe optique de la caméra 12 est par ailleurs confondu avec l'axe longitudinal x.

La figure 3 représente la partie capteur du plan focal de la caméra 12, cette partie capteur étant munie d'un repère correspondant (c, u, v). Dans cette partie capteur sont illustrées les images du panneau 34 lors du déplacement du véhicule 30. Les coordonnées (u,v) de l'image du panneau de signalisation 34 sont ici celles de son centre géométrique ou barycentre CDG qui suit une trajectoire « Traj » à mesure du déplacement du véhicule 30. L'image du panneau 34 est considérée comme appartenant à l'image acquise par la caméra 12 lorsque l'image du panneau 34 est entière comprise dans l'image de la caméra 12.

En se référant à la figure 4, le procédé débute par une étape 40 d'acquisition d'une image par la caméra 12 et se poursuit, en 42, par la mise en oeuvre par l'unité 14 d'un algorithme de détection de l'image du panneau 34 de signalisation dans l'image acquise par la caméra 12. Un test est alors mis en oeuvre en 44 pour savoir si la détection est positive. Si tel n'est pas le cas, l'étape 44 boucle sur l'étape 40 pour l'acquisition d'une nouvelle image.

Si l'image du panneau 34 de signalisation a été détecté dans l'image par l'unité 14 (image $P_0$ du panneau 34 illustré à la figure 3), une étape 46 d'initialisation est alors déclenchée dans laquelle, l'instant $t_0$ d'acquisition de l'image et la vitesse longitudinale $V_0$ du véhicule à cet instant, ainsi que les coordonnées $u_0$, $v_0$ de l'image du panneau 34 détectée sont stockés dans la mémoire 16. Enfin, toujours en 46, un compteur de cycles « i » est à initialisé à un par l'unité 14.

Dans une étape 48 suivante, une nouvelle image $I_i$ est acquise à l'instant $t_i$ par la caméra 12. Un algorithme de détection et de suivi du panneau 34 de signalisation dans l'image $I_i$ nouvellement acquise est alors mis en oeuvre par l'unité 14 dans une étape 50.

Un test est ensuite mis en oeuvre en 52 pour savoir si l'image du panneau 34 est toujours visible dans l'image $I_i$ nouvellement acquise. Si tel est le cas (par exemple image $P_i$ du panneau 34 illustré à la figure 3), l'instant $t_i$ d'acquisition de cette image $I_i$, la vitesse longitudinale $V_i$ à cet instant, ainsi que les coordonnées $u_i$, $v_i$ de l'image du panneau 34 dans l'image $I_i$ sont stockés, en 54, dans la mémoire 16.

Un exemple d'algorithme de détection et de suivi de l'image d'un panneau de signalisation dans un flux d'images est par exemple décrit dans le document de Chiung-Yao Fang et al., « Road-Sign Detection and Tracking », IEEE Transactions on Vehicular technology, vol.52, No 5, septembre 2003. Cet algorithme utilise un réseau de neurone pour la détection de l'image du panneau et un filtre de Kalman pour le suivi de celle-ci dans le flux d'images.

Ensuite, en 56, la distance $d_i$ parcourue par le véhicule entre les instants d'acquisition consécutifs $t_i$ et

**EP 2 050 644 B1**

$t_{i-1}$ est calculée selon la relation $d_i = V_i \times (t_i - t_{i-1})$ par l'unité 14 et stockée dans la mémoire 16. En 58, le compteur de cycles « i » est incrémenté d'une unité par l'unité 14 et l'étape 58 reboucle sur l'étape 48 pour un nouveau cycle d'acquisition et de suivi de l'image du panneau 34.

Si le test mis en oeuvre en 52 est négatif, c'est-à-dire que le panneau 34 de signalisation n'apparaît plus dans l'image (l'image $P_n$ du panneau 34 illustrée à la figure 3 est la dernière image entièrement comprise dans une image acquise par la caméra 12), le calcul de la distance de visibilité est déclenché.

Dans une étape 60, la distance « $d_{parcourue}$ » parcourue par le véhicule entre l'instant de la première détection de l'image du panneau 34 (instant $t_0$ correspondant à l'image $P_0$ illustrée à la figure 3) et l'instant où l'image du panneau 34 apparaît pour la dernière fois dans une image acquise par la caméra 12 (instant $t_n$ correspondant à l'image $P_n$ illustrée à la figure 3) est calculée en sommant les distances élémentaires parcourues entre deux instants d'acquisition consécutifs par la caméra 12, à savoir en sommant les distances $d_i$ stockées dans

la mémoire 16 selon la relation $d_{parcourue} = \sum_{i=1}^{n} d_i$ .

Ensuite, en 62, une distance longitudinale « dpp » entre le centre optique O de la caméra 12 et le panneau de signalisation 34 lorsque l'image de celui-ci est visible pour la dernière fois dans une image acquise par la caméra 12 est calculé par l'unité 14, c'est-à-dire la distance selon l'axe (0,x) entre le centre optique de la caméra 12 et le panneau 34 à l'instant $t_n$.

Pour ce faire, des coordonnées $(u_T, v_T)$ d'une image du panneau 34 (image $P_T$ illustrée à la figure 3) sont sélectionnées par l'unité 14 dans la mémoire 16 telle que, entre l'instant $t_n$ et l'instant d'acquisition $t_T$ correspondant à cette image, la trajectoire du véhicule 30 soit sensiblement rectiligne et la vitesse du véhicule 30 soit sensiblement constante. Par exemple, les coordonnées $(u_T, v_T)$ sont choisies de manière à ce que l'instant $t_T$ soit proche de l'instant $t_n$. De cette manière, la trajectoire du véhicule est approximable par un segment de droite et la variation de vitesse du véhicule est négligeable.

La distance longitudinale « dpp » est alors calculée par l'unité 14 selon la relation :

$$d_{pp} = \frac{V_T \times (t_n - t_T) \times u_T}{u_n - u_T}$$

où $V_T$ est la vitesse longitudinale du véhicule à l'instant $t_T$ mémorisée dans la mémoire 16.

Dans une étape 64 suivante, l'unité 14 calcule la distance de visibilité « $d_{visibilité}$ » du conducteur du véhicule 30 selon la relation :

$$d_{visibilité} = d_{parcourue} + d_{pp}$$

Ensuite, en 66, l'unité 14 calcule une consigne de vitesse longitudinale pour le véhicule selon la relation :

$$V_{consigne} = \frac{d_{visibilité}}{t_{réaction}}$$

où $t_{réaction}$ est un temps de réaction sécuritaire prédéterminé du conducteur. Le temps de réaction est le temps mis par un conducteur entre le moment où un signal est perçu visuellement (comme par exemple l'allumage de feux de stop du véhicule précédent) et le moment où une action est engagée par le conducteur (par exemple l'appui sur une pédale de frein). Le temps de réaction est généralement admis comme étant égal à 2 secondes.

Dans une étape 68 suivante, un test est mis en oeuvre par l'unité 14 pour savoir si la vitesse actuelle du véhicule est supérieure ou égale à la vitesse de consigne $V_{consigne}$ calculée.

Si tel n'est pas le cas, l'étape 68 boucle sur elle-même pour continuer la surveillance de la vitesse.

Si tel est le cas, cette information est transmise par l'unité 14 à l'interface homme/machine 20 pour en avertir le conducteur ou proposer au conducteur la vitesse de consigne $V_{consigne}$. En variante, la vitesse de consigne $V_{consigne}$ est transmise au régulateur de vitesse 22 qui ralentit alors automatiquement le véhicule pour adapter sa vitesse à la distance de visibilité calculée.

Il a été décrit un procédé dans lequel la détection et le suivi de l'image d'un panneau de signalisation dans un flux d'images est utilisé. Ceci est avantageux dans la mesure où les panneaux de signalisation sont aisément identifiables en raison de leur forme et/ou de leur couleur. D'autres types de repères peuvent cependant être utilisés, comme par exemple des lampadaires.

De même, il a été décrit un procédé dans lequel le calcul des distances élémentaires $d_i$ est réalisé aux mêmes instants que l'acquisition d'image par la caméra. On comprendra que ce calcul peut être effectué à des instants différents, par exemple à une fréquence plus élevée, pour accroître la précision sur la distance parcourue.

**Revendications**

1. Procédé de mesure de la distance de visibilité d'un conducteur de véhicule automobile, comportant la détection et le suivi d'un objet (40-58), image d'un repère immobile dans le référentiel terrestre, dans un flux d'images en provenance de moyens (12) d'acquisition d'image embarqués dans le véhicule, et comportant le calcul (60-64) de la distance de visibilité en fonction d'une distance parcourue par le véhicule entre un premier instant où l'objet est détecté pour la première fois dans le flux d'images et un deuxième instant où l'objet apparaît pour la dernière fois dans celui-ci,
**caractérisé en ce que**
la distance de visibilité est calculée comme étant la somme de ladite distance parcourue et d'une distance longitudinale entre l'objet et les moyens d'acquisition d'image au deuxième instant.

2. Procédé selon la revendication 1, **caractérisé en ce que** ladite distance longitudinale est calculée selon la relation :

$$d_{pp} = \frac{V_T \times (t_n - t_T) \times u_T}{u_n - u_T}$$

où $d_{pp}$ est ladite distance longitudinale, $t_n$ est le deuxième instant, $t_T$ est un troisième instant précédent le deuxième instant, $V_T$ est la vitesse du véhicule au troisième instant, et $u_T$ et $u_n$ sont des coordonnées de l'objet au troisième et deuxième instants respectivement dans le plan image de la caméra selon un axe de celui-ci correspondant à un axe transversal du véhicule.

3. Procédé selon la revendication 2, **caractérisé en ce qu'**il comporte en outre :

le calcul (66) d'une consigne de vitesse longitudinale pour le véhicule automobile en fonction de la distance de visibilité calculée.

4. Procédé selon la revendication 3, **caractérisé en ce que** la consigne de la vitesse longitudinale est calculée selon la relation :

$$V_{consigne} = \frac{d_{visibilité}}{t_{réaction}}$$

dans laquelle $d_{visibilité}$ est la distance de visibilité calculée, et $t_{réaction}$ est un temps de réaction sécuritaire prédéterminé du conducteur.

**Claims**

1. Method for measuring the visibility distance of a motor vehicle driver, comprising the detection and the tracking of an object (40-58), this being the image of a stationary benchmark in the terrestrial reference frame, in a stream of images originating from image acquisition means (12) on board the vehicle, and comprising the calculation (60-64) of the visibility distance as a function of a distance travelled by the vehicle between a first instant at which the object is detected for the first time in the stream of images and a second instant at which the object appears in the latter for the last time,
**characterized in that**
the visibility distance is calculated as being the sum of the said distance travelled and of a longitudinal distance between the object and the image acquisition means at the second instant.

2. Method according to Claim 1, **characterized in that** the said longitudinal distance is calculated according to the relation:

$$d_{pp} = \frac{V_T \times (t_n - t_T) \times u_T}{u_n - u_T}$$

where $d_{pp}$ is the said longitudinal distance, $t_n$ is the second instant, $t_T$ is a third instant preceding the second instant, $V_T$ is the speed of the vehicle at the third instant, and $u_T$ and $u_n$ are coordinates of the object at the third and second instants respectively in the image plane of the camera along an axis of the latter corresponding to a transverse axis of the vehicle.

3. Method according to Claim 2, **characterized in that** it furthermore comprises:

the calculation (66) of a longitudinal speed setpoint for the motor vehicle as a function of the calculated visibility distance.

4. Method according to Claim 3, **characterized in that** the setpoint of the longitudinal speed is calculated according to the relation:

$$V_{setpoint} = \frac{d_{visibility}}{t_{reaction}}$$

in which $d_{visibility}$ is the calculated visibility distance, and $t_{reaction}$ is a predetermined safe reaction time of the driver.

**Patentansprüche**

1. Verfahren zur Messung der Sichtweite eines Fahrers eines Kraftfahrzeugs, das die Erfassung und die Verfolgung eines Objekts (40-58), das eine Abbildung eines unbeweglichen Bezugspunkts im Erd-Bezugssystem ist, in einer von Bilderfassungseinrichtungen (12) an Bord des Fahrzeugs kommenden Bilderflut aufweist, und die Berechnung (60-64) der Sichtweite abhängig von einer vom Fahrzeug zwischen einem ersten Zeitpunkt, zu dem das Objekt zum ersten Mal in der Bilderflut erfasst wird, und einem zweiten Zeitpunkt, zu dem das Objekt zum letzten Mal in dieser erscheint, gefahrenen Strecke aufweist, **dadurch gekennzeichnet, dass**

die Sichtweite als die Summe der gefahrenen Strecke und eines Längsabstands zwischen dem Objekt und den Bilderfassungseinrichtungen zum zweiten Zeitpunkt berechnet wird.

2. Verfahren nach Anspruch 1, **dadurch gekennzeichnet, dass** der Längsabstand gemäß der folgenden Beziehung berechnet wird:

$$d_{pp} = \frac{V_T \, x(t_n - t_T) \, x u_T}{u_n - u_T}$$

wobei $d_{pp}$ der Längsabstand, $t_n$ der zweite Zeitpunkt, $t_T$ ein dritter Zeitpunkt vor dem zweiten Zeitpunkt, $V_T$ die Geschwindigkeit des Fahrzeugs zum dritten Zeitpunkt und $u_T$ und $u_n$ Koordinaten des Objekts zum dritten bzw. zweiten Zeitpunkt in der Bildebene der Kamera gemäß einer Achse von dieser sind, die einer Querachse des Fahrzeugs entspricht.

3. Verfahren nach Anspruch 2, **dadurch gekennzeichnet, dass** es außerdem aufweist:

die Berechnung (66) eines Längsgeschwindigkeits-Sollwerts für das Kraftfahrzeug abhängig von der berechneten Sichtweite.

4. Verfahren nach Anspruch 3, **dadurch gekennzeichnet, dass** der Längsgeschwindigkeits-Sollwert gemäß der folgenden Beziehung berechnet wird:

$$V_{Sollwert} = \frac{d_{Sichtbarkeit}}{t_{Reaktion}}$$

wobei $d_{sichtbarkeit}$ die berechnete Sichtweite und $t_{Reaktion}$ eine vorbestimmte Sicherheits-Reaktionszeit des Fahrers ist.

**Fig. 1**

Véhicule
à $t_0$

Véhicule
à $t_i$

$d_{visible}$

Véhicule
à $t_n$

$d_{pp}$

**Fig. 2**

C

u

$u_0$

$P_0$  $CDG_0$

Traj

$P_i$

v

$u_i$

$CDG_i$

$u_T$

$u_{pp}$

**Fig. 3**

$P_T$

$CDG_n$

$P_n$

Fig. 4

## RÉFÉRENCES CITÉES DANS LA DESCRIPTION

**Documents brevets cités dans la description**

- FR 2847367 A
- FR 2884637 A
- DE 1004461 A
- FR 2876826 A

**Littérature non-brevet citée dans la description**

- **FANG et al.** Road-Sign Detection and Tracking. *IEEE Transactions on Vehicular technology,* Septembre 2003, vol. 52 (5